# EUROPÄISCHE PATENTSCHRIFT

(11) **EP 3 750 742 B1**
(45) Veröffentlichungstag und Bekanntmachung des Hinweises auf die Patenterteilung: **08.07.2026**
(21) Anmeldenummer: 20173302.9
(22) Anmeldetag: 06.05.2020
(51) Int. Cl.: B60L 53/35, G08G 1/14

(54) **PARKSYSTEM FÜR FAHRZEUGE**
PARKING SYSTEM FOR VEHICLES
SYSTÈME DE STATIONNEMENT POUR VÉHICULES

(30) Priorität: 13.06.2019 DE 102019208581
(43) Veröffentlichungstag der Anmeldung: 16.12.2020
(73) Patentinhaber: VOLKSWAGEN AG, 38440 Wolfsburg (DE)
(72) Erfinder: Stichowski, Torsten, 39128 Magdeburg (DE); Schreiner, Dimitri, 38116 Braunschweig (DE); Kiczinski, Daniel Niklas, 38165 Lehre (DE); Lange, Andreas, 38106 Braunschweig (DE)

(56) Entgegenhaltungen:
- WO-A2-2018/096984
- DE-A1- 102010 033 215
- DE-A1- 102015 204 366
- DE-A1- 102016 000 783
- US-A1- 2018 218 605

## Beschreibung

Die Erfindung betrifft ein Parksystem für Fahrzeuge, insbesondere Kraftfahrzeuge, nach dem Oberbegriff des Anspruchs 1.

Im Bereich der automobilen Mobilität vollziehen sich derzeit zahlreiche neue Entwicklungen parallel. Einerseits gibt es verstärkt Anstrengungen, weitgehend abgasfreie Fahrzeuge zu entwickeln, andererseits sind Anstrengungen im Gange, Fahrzeuge so auszugestalten, dass sie autonom oder teilautonom im Straßenverkehr bewegbar sind. Dabei sind autonom im Straßenverkehr bewegbare Fahrzeuge solche, die sich in allen Geschwindigkeitsbereichen und allen Umgebungsszenarien autonom im Verkehr bewegen können. Unter teilautonom im Straßenverkehr bewegbaren Fahrzeugen wird dagegen verstanden, dass diese nur bei geringer Geschwindigkeit und in definierter Fahrsituation autonom fahrbar sind.

Im Hinblick auf die Entwicklung weitgehend abgasfreier Fahrzeuge sind besondere Anstrengungen auf die Entwicklung mittels aufladbarer Traktionsbatterien vollständig oder teilweise elektrisch betriebener Fahrzeuge konzentriert. Sowohl diese elektrisch betriebenen Fahrzeuge, als auch Fahrzeuge die über konventionelle Antriebe verfügen, werden bereits jetzt mit Funktionen ausgestattet, die zumindest in eingeschränktem Umfang ein teilautonomes Bewegen des Fahrzeugs erlauben. Im Zuge dieser Entwicklung findet eine immer stärkere funktechnische Vernetzung dieser autonom oder teilautonom betreibbaren Fahrzeuge mit der Infrastruktur statt.

Die zunehmende Zahl an mittels aufladbarer Traktionsbatterien vollständig oder teilweise elektrisch betriebener Fahrzeuge führt zu dem Problem, dass eine Ladeinfrastruktur geschaffen werden muss, die ein komfortables Aufladen der Traktionsbatterie erlaubt. Unter komfortabel ist hier in erster Linie zu verstehen, dass sich die Nutzung eines mit einer Traktionsbatterie ausgestatteten Elektrofahrzeugs von der Nutzung eines konventionell betriebenen Fahrzeugs nur unwesentlich unterscheidet. Heute übliche Ladesysteme, sowohl fahrzeugseitig, als auch infrastrukturseitig, benötigen für das Laden der Traktionsbatterien aber noch zu viel Zeit, so dass auf die Möglichkeit zurückgegriffen werden muss, die Traktionsbatterien zu Zeiten aufzuladen, in denen das Fahrzeug ohnehin stillsteht.

Da elektrisch betriebene Fahrzeuge mit einer Traktionsbatterie den Status der weitgehenden Abgasfreiheit nur dann erlangen, wenn der Strom für die Traktionsbatterie aus erneuerbaren Energiequellen gewonnen wird - also weitgehend aus Sonnenenergie und Windkraft - und diese Energieformen nicht permanent in gleichem Umfang verfügbar sind, besteht das Problem mittels Sonnenenergie und Windkraft produzierten Strom zwischenzuspeichern und im Bedarfsfall an das Stromnetz abzugeben. Verstärkt wird diese Problematik dadurch, dass im Zuge der sogenannten "Energiewende" die Stromproduktion weitgehend auf erneuerbare Energien im vorstehend genannten Sinn umgestellt werden soll. Um in diesem Gesamtzusammenhang die Netzstabilität aufrechtzuerhalten, ist es notwendig elektrische Energie in großem Umfang zwischenzuspeichern. Neben anderen Möglichkeiten der Speicherung wurde bereits vorgeschlagen, die Traktionsbatterien von Elektrofahrzeugen als Zwischenspeicher zu verwenden. Hierzu sind unter dem Stichwort "Smart Grit" zahlreiche Entwicklungen im Gange, um mit einem solchen "intelligenten Stromnetz" Traktionsbatterien von Elektrofahrzeugen als Zwischenspeicher in das Stromnetz zu dessen Stabilisierung einzubinden.

Im Zuge der vorstehend skizzierten Entwicklungen werden an Parksysteme für Fahrzeuge zukünftig völlig neue Anforderungen herangetragen. Dies gilt insbesondere hinsichtlich der zunehmend inhomogenen Zusammensetzung der Fahrzeuge, die von einem solchen Parksystem aufzunehmen sind. Unter inhomogener Zusammensetzung wird hier insbesondere verstanden, dass in einem Parksystem sowohl Fahrzeuge mit Verbrennungsmotor, als auch mit einer Traktionsbatterie elektrisch betriebene Fahrzeuge oder mittels Brennstoffzelle elektrisch betriebene Fahrzeuge abgefertigt werden müssen und alle Fahrzeugtypen mit der Infrastruktur mittels einer normierten Schnittstelle funktechnisch vernetzt sein können und gegebenenfalls über die Fähigkeit des autonomen Fahrens verfügen.

Im vorstehend beschriebenen Zusammenhang ist aus der US 20170136889 A1 ein Steuersystem für ein wiederaufladbares Fahrzeug bekannt, wobei das Steuersystem einen Fahrzeug-Tracker enthält, der wiederaufladbare Elektrofahrzeuge identifiziert, die aktuell in einem Transportnetz unterwegs sind und der die jeweils letzte bekannte Position in dem Transportnetz jedes wiederaufladbaren Elektrofahrzeugs verfolgt. Weiter beinhaltet das Steuersystem einen Fahrzeugrouter, der die wiederaufladbaren Elektrofahrzeuge zu einem von mehreren Ladesegmenten entlang der Transportwege leitet, die sich im Transportnetz befinden derart, dass die Elektrofahrzeuge im Transportnetz lastverteilt geladen werden. Ein solches Konzept trägt zwar zur Stabilisierung des die Ladesegmente versorgenden Netzes bei, löst aber das Problem der typgerechten Abfertigung von Fahrzeugen hinsichtlich des Parkens und/oder Ladens nicht.

Weiter ist es aus der US 20170203655 A1 bekannt, zum Abgleichen einer Stromnetzproduktion mit einer Stromnetznachfrage die Steuerung eines auf einer Induktionsfahrbahn fahrenden elektrifizierten Fahrzeugs vor und während eines Induktionsfahrbahnereignisses, so vorzunehmen, dass entweder ein Ladungszustand eines Batteriesatzes als Reaktion auf eine erste Netzbedingung des Stromnetzes aufrechterhalten wird oder der Batteriesatz als Reaktion auf eine zweite Netzbedingung des Stromnetzes entladen wird. Ein solches System erfordert ein speziell ausgestaltetes Fahrbahnnetz mit Induktionsfahrbahnen und löst ebenfalls das Problem der typgerechten Abfertigung von Fahrzeugen hinsichtlich des Parkens und/oder Ladens nicht.

Aus der US 7309966 B2 ist bekannt, dass ein Elektrofahrzeug, welches üblicherweise seine elektrische Energie aus einem elektrischen Versorgungsnetz zieht und deshalb auch über entsprechende Anschlüsse mit Anschluss an ein elektrisches Versorgungsnetz verfügt, nicht mehr nur mit der elektrischen Energie aus dem Versorgungsnetz geladen werden kann, sondern im Bedarfsfall auch zu einem bestimmten Zeitpunkt nichtbenötigte Energie in das Versorgungsnetz einspeist. Auch hier wird lediglich eine Stabilisierung eines Ladenetzes für Elektrofahrzeuge mit Traktionsbatterie erreicht, eine typgerechte Abfertigung von Fahrzeugen hinsichtlich des Parkens und/oder Ladens erfolgt nicht.

Die DE 102008055881 A1 schließlich beschreibt ein System mit Fahrzeugen, die mit einer Fahrzeugsteuerung zum selbstgesteuerten Fahren des Fahrzeugs ausgestattet sind. Weiter weisen die Fahrzeuge ein Ladesystem zum elektrischen Laden der Fahrzeuge und mindestens einem Ladekontakt auf, der mit mindestens einem Ladekontakt der Ladestation an einem Ladeort funktional verbindbar ist. Weiter ist ein Ladeortsystem vorgesehen, das die Fahrzeuge an einem Übergabebereich übernimmt, startet und selbstgesteuert einen vom Ladeortsystem ausgewählten Ladeort ansteuert. Am ausgewählten Ladeort stellt das Ladeortsystem zwischen dem Fahrzeug und der Ladestation des Ladeortes einen Ladekontakt her und lädt oder entlädt das Fahrzeug oder verwendet es als Energiepuffer. Zu einem vom Nutzer vorgewählten Zeitpunkt führt das Ladeortsystem das Fahrzeug mit dem vom Nutzer vorgegebenen Ladezustand selbstgesteuert dem ausgewählten Übernahmebereich zu. Hier ist ein System beschrieben, das ausschließlich für mittels aufladbarer Traktionsbatterien vollständig oder teilweise elektrisch betriebene Fahrzeuge geeignet ist, die jeweils eine mit einer Ladesteuerung verbundene funkgestützte Kommunikationseinrichtung aufweisen und autonom oder teilautonom fahrbar sind, wobei die Ladesteuerung den Lade- und/oder Entladevorgang definierende Parameter enthält. Für diesen einen Fahrzeugtyp löst das beschriebene System zwar die Park-, Lade-, Entlade- und Netzpuffer-Problematik, die Mehrzahl der Fahrzeuge, die diese speziellen Funktionen nicht besitzen, können aber von diesem System nicht abgefertigt werden.

Aus der WO 2018/096984 A2 ist ein gattungsgemäßes Parksystem bekannt. Die US 2018/218605 A1 offenbart eine automatisierte Parkplatzbelegung. Aus der DE 10 2016 000 783 A1 ist ein Verfahren zu Auslastungsoptimierung von Rauminhalt und Energie bekannt. Die DE 10 2015 204366 A1 offenbart eine Freigabesteuerung eines Parkplatzes. Aus der DE 10 2010 033215 A1 sind ein Verfahren zur Unterstützung eines Einparkvorgangs in einem Parkhaus, ein Einparksystem für ein Fahrzeug und ein Belegungszustandserkennungssystem für ein Parkhaus bekannt.

Ausgehend vom vorstehend angesprochenen Stand der Technik ist es daher Aufgabe der Erfindung, ein Parksystem für Fahrzeuge bereitzustellen, das es erlaubt alle Fahrzeuge einer inhomogen zusammengesetzten Mobilitätsstruktur im Individualverkehr hinsichtlich Parkwunsch und/oder Ladewunsch und/oder Entladewunsch optimiert abzufertigen und mittels der in das System eingebundenen Traktionsbatterien die Ladeinfrastruktur zu stabilisieren. Es sollen also mittels des Parksystems gleichermaßen konventionell betriebene Fahrzeuge mit Verbrennungsmotor, mit einer Traktionsbatterie elektrisch betriebene Fahrzeuge oder Fahrzeuge mit Brennstoffzellenantrieb abgefertigt werden, unabhängig davon, ob diese mit der Infrastruktur funktechnisch vernetzt sind und gegebenenfalls über die Fähigkeit des autonomen Fahrens verfügen.

Gelöst wird die Aufgabe durch die Merkmale des Hauptanspruchs. Vorteilhafte Ausgestaltungen und Weiterbildungen sind jeweils in den abhängigen Ansprüchen offenbart.

Zur Lösung der Aufgabe wird vorgeschlagen, ein Parkplatzsteuersystem vorzusehen, das Unterscheidungsmittel aufweist, die in das Parksystem einfahrende Fahrzeuge detektieren und in einer Abfrage zumindest feststellen, ob das jeweilige Fahrzeug eine mit dem Parkplatzsteuersystem kompatiblen autonomen oder teilautonomen Fahrmodus aufweist und Fahrzeuge die einen solchen kompatiblen autonomen oder teilautonomen Fahrmodus aufweisen einer ersten Kategorie und alle übrigen Fahrzeuge einer zweiten Kategorie zuordnet. Weiter ist vorgesehen, dass das Parkplatzsteuersystem bei Fahrzeugen der ersten Kategorie im Zuge eines ersten Steuerungsablaufs die Kontrolle über diese Fahrzeuge übernimmt und im autonomen oder teilautonomen Fahrmodus parameterabhängig autonom zu einem Parkplatz einer zweiten Kategorie ohne Lademöglichkeit oder zu einem Ladeterminal mit vollautomatischer Lade- und/oder Entladefunktion steuert. Für Fahrzeuge der zweiten Kategorie ist vorgesehen, dass das Parkplatzsteuersystem diese im Zuge eines zweiten Steuerungsablaufs unter Zuhilfenahme eines Leitsystems parameterabhängig manuell gesteuert zu einem Parkplatz einer ersten Parkplatzkategorie mit manuell bedienbarer Lademöglichkeit und/oder Entlademöglichkeit oder zu einem Parkplatz einer zweiten Kategorie ohne Lademöglichkeit leitet. Hinsichtlich der Parameter ist vorgesehen, dass das Parkplatzsteuersystem die Vorgaben des Nutzers als Nutzerparameter abfragt und in einem Nutzerparameterspeicher speichert und Vorgaben des Parksystems als interne Parameter beinhaltet.

Der wesentliche Vorteil eines derartigen Parksystems besteht darin, dass alle Fahrzeugtypen vom Parkplatzsteuersystem des Parksystems weitgehend automatisiert abgefertigt werden, wobei durch Nutzerparametervorgabe nicht nur der Parkwunsch der Fahrzeuge berücksichtigt wird, sondern auch ein eventueller Ladewunsch von mittels Traktionsbatterie betriebener Elektrofahrzeuge, bzw. ein eventueller Entladewunsch solcher Fahrzeuge, wenn diese in ihrer Traktionsbatterie Ladung enthalten, die zum Beispiel zu niedrigen Konditionen aufgenommen wurde und zu höheren Konditionen vermarktet werden soll. Weiter ist das Parksystem vorteilhaft in der Lage, im autonomen oder teilautonomen Fahrmodus betreibbare Fahrzeuge, unabhängig davon, ob diese elektrisch oder mittels Verbrennungsmotor angetrieben sind, selbständig zu parken, den Parkort zu wechseln, ein Ladeterminal mit vollautomatischer Lade- und/oder Entladefunktion anzufahren oder einen Parkplatz mit oder ohne Lade- und/oder Entlademöglichkeit.

Zur Begriffsklärung ist an dieser Stelle darauf hinzuweisen, dass es sich bei dem Parkplatzsteuersystem um ein computergestütztes Steuersystem handelt, das in einem Speicher eines Steuerungsrechners gespeicherte Steuerungsanweisungen mittels eines ebenfalls im Steuerungsrechner enthaltenen Prozessors verarbeitet. Insbesondere die vorstehend angesprochenen Unterscheidungsmittel, der erste Steuerungsablauf und der zweite Steuerungsablauf sind solche zu Steuerroutinen zusammengefasste Steuerungsanweisungen, die - verarbeitet durch den Prozessor - die ihnen zugeordneten Steuerungsaufgaben mit Hilfe der im Parkplatzsteuersystem enthaltenen Eingabe- bzw. Ausgabemittel, Sensoren und Übertragungsmittel ausführen.

Hinsichtlich der Fahrzeuge, bezüglich der das Parkplatzsteuersystem die Kontrolle übernehmen kann, sind vorstehend und nachfolgend "im autonomen Fahrmodus fahrbare Fahrzeuge" und "im teilautonomen Fahrmodus fahrbare Fahrzeuge" angesprochen. Dabei sind im autonomen Fahrmodus fahrbare Fahrzeuge solche Fahrzeuge, die sich in allen Geschwindigkeitsbereichen und allen Umgebungsszenarien autonom im Verkehr bewegen können. Unter im teilautonomen Fahrmodus fahrbaren Fahrzeugen wird dagegen verstanden, dass diese nur bei geringer Geschwindigkeit und in definierter Fahrsituation autonom fahrbar sind. Die autonome Fahrfunktion beider Typen, so wie sie hier verstanden werden soll, ist ausreichend, sich innerhalb des erfindungsgemäßen Parksystems entsprechend den Steueranweisungen des Parkplatzsteuersystems autonom zu bewegen. Ist also vorstehend und nachfolgend die Rede davon, dass "das Parkplatzsteuersystem im Zuge eines ersten Steuerungsablaufs die Kontrolle über diese Fahrzeuge übernimmt und im autonomen oder teilautonomen Fahrmodus parameterabhängig autonom zu einem Parkplatz einer zweiten Kategorie ohne Lademöglichkeit oder zu einem vollautomatischen Ladeterminal steuert", ist damit gemeint, dass das Parkplatzsteuersystem dem Fahrzeug zwar das Ziel und ausgehend vom aktuellen Standpunk den Weg zum Ziel vorgibt, die Lenk-, Beschleunigungs- oder Bremsmanöver aber im Rahmen des autonomen oder teilautonomen Fahrmodus vom Fahrzeug selbst generiert wenden.

Der Begriff "vollautomatisches Ladeterminal" ist in dem hier beschriebenen Zusammenhang so zu verstehen, dass ein Fahrzeug, das vom Parkplatzsteuersystem gesteuert mittels des autonomen Fahrmodus in einem solchen Ladeterminal platziert wurde, vollautomatisch abgefertigt wird. Dazu stellt das Ladeterminal vollautomatisch eine Verbindung zu der fahrzeugseitigen Lade- bzw. Endladeeinrichtung selbständig her und führt den Lade- bzw. Entladevorgang einschließlich der Zwischenpufferung von Ladung gesteuert vom Parkplatzsteuersystem durch. Das Herstellen der Verbindung zu der fahrzeugseitigen Lade- bzw. Endladeeinrichtung erfolgt bei einer induktiv arbeitenden Lade- bzw. Entladeeinrichtung durch geeignetes Platzieren des Fahrzeugs gegenüber dem Ladeterminal. Handelt es sich um eine Ladeverbindung mittels Stecker, erfolgt die Verbindung zu der fahrzeugseitigen Lade- bzw. Endladeeinrichtung mittels eines durch das Ladeterminal gesteuerten Roboterarms. Der Aufenthalt in einem solchen vollautomatischen Ladeterminal ist stets nur temporär. Ein Fahrzeug dessen Aufenthaltsdauer im Parksystem länger dauern soll, als der automatische Lade- bzw. Entladevorgang dauert, wird vor und/oder nach dem automatischen Lade- bzw. Entladevorgang auf einem Parkplatz ohne Ladefunktion geparkt. Diese Umparkvorgänge erfolgen in dem oben definierten Sinn durch das Parkplatzsteuersystem gesteuert autonom. Im Gegensatz zu einem vollautomatischen Ladeterminal sind auf Parkplätzen mit manueller Lademöglichkeit und/oder Entlademöglichkeit die Lade- bzw. Entladeeinrichtungen manuell zu bedienen, so muss insbesondere die Verbindung von den parksystemseitigen Lade- bzw. Entladeeinrichtungen zu der fahrzeugseitigen Lade- bzw. Entladeeinrichtungen von Hand hergestellt werden.

Für die automatische Abwicklung des Aufenthaltes im Parksystem ist es von Vorteil, wenn die Nutzerparameter wenigstens eine der Nutzerangaben Parken, Laden und/oder Entladen einer eventuell vorhandenen Traktionsbatterie, Nutzung einer eventuell vorhandenen freien Kapazität einer Traktionsbatterie als Puffer, Aufenthaltsdauer des Fahrzeugs im Parksystem, Preisvorgaben für das Laden, Preisvorgaben für das Entladen, Preisvorgaben für die Nutzung der Batterie als Puffer betreffen.

Werden vom Parksystem noch weitere Dienstleistungen angeboten, die mit den Fahrzeugen im Parksystem in Verbindung stehen, so ist es selbstverständlich möglich, eine Vielzahl weiterer Nutzerparameter vorzusehen, die diese Dienstleistungen definieren und es dem Parkplatzsteuersystem ermöglichen, deren zeitliche Einplanung in Bezug auf die Aufenthaltsdauer des Fahrzeugs vorzunehmen. Solche Dienstleistungen können eine Innen- und/oder Außenreinigung des Fahrzeugs eine Betankung des Fahrzeugs mit flüssigem oder gasförmigen Treibstoff oder eine andere Service-Dienstleistung am Fahrzeug sein. Handelt es sich bei dem jeweiligen Fahrzeug um ein durch das Parkplatzsteuersystem gesteuertes autonom fahrbares Fahrzeug, werden die Orte, an denen die jeweilige Serviceleistung erbracht wird, vom Fahrzeug autonom angefahren. Im Falle einer manuellen Steuerung erfolgt die Anfahrt durch Unterstützung des manuell steuernden Fahrers mittels des vom Parkplatzsteuersystem aktivierten Leitsystems.

Ebenfalls für die automatische Abwicklung erforderlich sind Vorgaben des Parksystems, die als interne Parameter im Parkplatzsteuersystem vorliegen und vorteilhaft wenigstens eine der Parksystemvorgaben Ladezeitpunkt, Entladezeitpunkt, Pufferzeitpunkt, Parkort, Ladeort betreffen. Generell stellen die internen Parametervorgaben des Parkplatzsteuersystems sicher, dass die vom Nutzer nachgefragten Serviceleistungen mit dem Fahrzeug kompatibel und innerhalb der zeitlichen Vorgaben abwickelbar sind.

Erläuternd ist hier anzumerken, dass das Parkplatzsteuersystem die wenigstens eine Nutzervorgabe als Nutzerparameter und die wenigstens eine Parksystemvorgabe als internen Parameter benötigt, um den Aufenthalt eines in das Parksystem einfahrenden Fahrzeugs zu planen, indem das Parkplatzsteuersystem die bis zum Einfahren des Fahrzeugs bestehende, mit Hilfe von Planungsmittel erstellte Planung fortschreibt. Es liegt demnach zu jedem Zeitpunkt im Parkplatzsteuersystem eine zeitbasierte Planung bezüglich des Aufenthaltes eines jeden Fahrzeugs im Parksystem vor, die alle oben angesprochenen Aspekte beinhaltet.

Hinsichtlich der vorteilhaften Ausbildung des Parksystems wird vorgeschlagen, dass die Nutzervorgaben aus einem Parameterspeicher im Fahrzeug auf funktechnischem Wege über eine normierte Schnittstelle an das Parkplatzsteuersystem übermittelbar sind. Diese Variante ermöglicht es, dass Nutzerparameter zu einem früheren Zeitpunkt manuell oder, bei entsprechender Ausbildung des Fahrzeugs, automatisch generiert werden und bei Einfahrt in das Parksystem automatisch an das Parkplatzsteuersystem übermittelt werden. Funktechnische Verbindungen, wie sie hier zum Einsatz kommen, können denen entsprechen, wie sie zur allgemeinen Fahrzeug-Infrastruktur-Kommunikation notwendig sind und bereits vorgeschlagen wurden. Zur vorstehend erwähnten automatischen Generierung von Nutzerparametern können beispielsweise Einträge in elektronische Terminkalender oder sonstige Einträge in elektronische Medien zum Beispiel in sozialen Netzwerken herangezogen werden, sofern sich diesen elektronischen Einträgen Fahrzeugbewegungen zuordnen lassen und die Fahrzeugsteuerung auf solche Einträge Zugriff hat.

Besitzt ein Fahrzeug keine funktechnische Verbindung mit normierter Schnittstelle oder ist diese Verbindungsmöglichkeit im Fahrzeug deaktiviert, besteht eine weitere vorteilhafte Möglichkeit zur Übermittlung von Nutzerparameter an das Parkplatzsteuersystem darin, den Nutzer, zum Beispiel vor Freigabe der Einfahrt in das Parksystem, zu veranlassen, durch manuelle Eingabe in mit dem Parkplatzsteuersystem verbundene Auswahlmittel, die für den Aufenthalt relevanten Nutzerparameter dem Parkplatzsteuersystem zu übermitteln. Bei den Auswahlmitteln kann es sich zum Beispiel um einen interaktiven Bildschirm handeln.

Weiter kann es von Vorteil sein, die für die geplante Nutzung des Parksystems relevanten Nutzerparameter dem Parksteuersystem unter Nutzung eines öffentlichen Netzes, zum Beispiel durch manuelle Eingabe in ein mobiles Handgerät und anschließender Übermittlung über das öffentliche Netz, mitzuteilen. In diesem Fall ist vorteilhaft eine mit dem Parkplatzsteuersystem verbundene, zum Beispiel über das Internet ansprechbare interaktive Plattform vorgesehen, die Auswahlmöglichkeiten für Nutzerparameter auf dem interaktiven Bildschirm zum Beispiel eines Smartphones darstellt und der Nutzer die ihm genehmen Nutzerparameter durch Tastatur- oder Bildschirmeingabe an das Parkplatzsteuersystem übermittelt.

Im dem Fall, dass zwischen Fahrzeug und Parkplatzsteuersystem eine funktechnische Verbindung der oben beschriebenen Art besteht, ist es in Ausbildung des Parksystems vorteilhaft, wenn das Parkplatzsteuersystem Parameterabfragemittel enthält, mittels der es feststellt, ob gemäß der in einem fahrzeugseitigen Parameterspeicher gespeicherten Nutzerparameter ein Fahrzeug geparkt und/oder dessen Traktionsbatterie geladen und/oder entladen werden soll und/oder ob freie Kapazitäten der Traktionsbatterie als Pufferspeicher für elektrische Ladung verfügbar sind und wie lange das Fahrzeug zur Verfügung steht. Unter Parameterabfragemittel wird hier eine Dialogroutine verstanden, mittels der, nach Aufsetzen des Dialogs durch das Parkplatzsteuersystem, über ein im Fahrzeug vorhandenes Fahrzeugsteuersystem Nutzerparameter, die an einem dem Fahrzeugsteuersystem bekannten Speicherort gespeichert sind, vom Parkplatzsteuersystem abgefragt werden.

Falls das Fahrzeug nicht über eine funktechnische Einrichtung verfügt, um mit dem Parkplatzsteuerungssystem zu kommunizieren oder wenn diese Einrichtung deaktiviert ist, ist in einer vorteilhaften Ausgestaltung vorgesehen, dass das Parkplatzsteuersystem Auswahlmittel enthält, mittels der manuell auswählbar ist, ob ein Fahrzeug geparkt und/oder geladen und/oder entladen werden soll und/oder ob freie Kapazitäten einer Traktionsbatterie als Pufferspeicher für elektrische Ladung verfügbar sind und wie lange das Fahrzeug zur Verfügung steht. Derartige Auswahlmittel weisen vorteilhaft einen interaktiven Bildschirm auf, mittels dem eine Nutzerparameterauswahl anzeigbar ist und vom Nutzer gewünschte Nutzerparameter durch Antippen auswählbar sind.

Eine weitere Ausgestaltung des Parksystems sieht vor, dass das Parkplatzsteuersystem ein Fahrzeug-Tracking-System und das Leitsystem Anzeigemittel enthält. So ausgestattet ortet das Parkplatzsteuersystem Fahrzeuge mittels des Fahrzeug-Tracking-Systems in Echtzeit. Handelt es sich um Fahrzeuge mit autonomer oder teilautonomer Fahrfunktion, steuert das Parkplatzsteuersystem diese in Abhängigkeit von den dem jeweiligen Fahrzeugen zugeordneten Parametern im Zuge des ersten Steuerungsablaufs unter Zuhilfenahme der Echtzeitortung des Fahrzeug-Tracking-Systems zu einem Parkplatz der zweiten Parkplatzkategorie oder zu einem vollautomatischen Ladeterminal. Bei Fahrzeugen ohne autonome Fahrfunktion dirigiert das Parkplatzsteuersystems diese im Zuge des zweiten Steuerungsablaufs unter Zuhilfenahme der Echtzeitortung des Fahrzeug-Tracking-System und der Anzeigemittel des Leitsystem manuell gesteuert zu einem Parkplatz der ersten Parkplatzkategorie oder zu einem Parkplatz der zweiten Parkplatzkategorie.

Durch das Fahrzeug-Tracking-System können jedem Fahrzeug die für dieses Fahrzeug vom Nutzer ausgewählten Nutzerparameter zu jedem Zeitpunkt zugeordnet werden. Weiter lässt sich ein manuell gesteuertes Fahrzeug im zweiten Steuerungsablauf, bei versehentlichem nicht Beachten des durch die Anzeige des Leitsystems vorgegebenen Weges, trotzdem an die richtige Stelle dirigieren, indem die Leitvorgaben in Echtzeit angepasst werden. Bei wiederholter Missachtung der Leitvorgaben des Leitsystems durch den manuell steuernden Nutzer kann dieser durch Alarmierung von Servicepersonal oder den Einsatz technischer Mittel gestoppt werden.

Tracking-Systeme wie sie vorstehend angesprochen sind können auf unterschiedliche Weise realisiert werden und sind auch unter dem Begriff "Objektidentifikation und Objektverfolgung" Gegenstand zahlreicher Publikationen. Da das Tracking-System selbst nicht Gegenstand der vorliegenden Erfindung ist, sondern lediglich dessen Anwendung, wird hier bezüglich deren Funktionsweise beispielhaft auf die DE 10 2009 038 364 A1 und die darin angesprochene Sekundärliteratur verwiesen.

Die vorstehend angesprochenen Anzeigemittel können sich außerhalb des Fahrzeugs befinden und zum Beispiel in Form von Lichtsignalen den einzuschlagenden Weg anzeigen, es ist aber auch denkbar, dass - eine entsprechende Kommunikationseinrichtung zwischen Parkplatzsteuersystem und Fahrzeug vorausgesetzt - der einzuschlagende Weg im Fahrzeug durch eine entsprechende Anzeige, zum Beispiel ein Head-up-Display, angezeigt wird.

Bei einem Parksystem außerhalb des Schutzumfanges der Erfindung kann vorteilhaft vorgesehen sein, dass das Parkplatzsteuersystem eine Detektionseinrichtung für einfahrende Fahrzeuge und eine funkgestützte Kommunikationseinrichtung mit normierter Kommunikationsschnittstelle aufweist und dass das Parkplatzsteuersystem so ausgebildet, dass es bei Detektion eines einfahrenden Fahrzeugs mittels der Kommunikationseinrichtung über die normierte Kommunikationsschnittstelle einen Kommunikationsdialog initiiert. Im Fall des Zustandekommens eines Kommunikationsdialogs stellt das Parkplatzsteuersystem zunächst fest, ob es sich um ein autonom fahrbares Fahrzeug handelt. Weist das Fahrzeug eine autonome Fahrfunktion auf, übernimmt das Parkplatzsteuersystem im Zuge des ersten Steuerungsablaufs die Kontrolle über das Fahrzeug. Weist das Fahrzeug keine autonome Fahrfunktion auf, aktiviert das Parkplatzsteuersystem im Zuge des zweiten Steuerungsablaufs das Leitsystem. Kommt nach dem Initiieren eines Kommunikationsdialogs durch das Parkplatzsteuersystem kein Kommunikationsdialog zustande, aktiviert das Parkplatzsteuersystem im Zuge des zweiten Steuerungsablaufs das Leitsystem. Durch diese Ausgestaltung und verfahrenstechnische Vorgehensweise wird sichergestellt, dass jedes Fahrzeug, abhängig von seinen aktuellen Fähigkeiten, automatisch dem richtigen Steuerungsablauf zugeordnet wird und zwar auch dann, wenn zum Beispiel die Kommunikationsfähigkeit oder der autonome oder teilautonome Fahrmodus des Fahrzeugs defekt ist oder abgeschaltet wurde.

Erfindungsgemäß ist eine dritte Parkplatzkategorie vorgesehen, die wenigstens zwei Parkplätze umfasst, wobei die Parkplätze der dritten Parkplatzkategorie mit einer Lade- und/oder Entladeeinrichtung so ausgestattet sind, dass von jedem der Parkplätze dieser dritten Kategorie mit wenigstens einem anderen Parkplatz dieser dritten Kategorie Ladung direkt ausgetauscht werden kann. Dadurch wird die Möglichkeit geschaffen, dass zwischen zwei Fahrzeugen mit Traktionsbatterie, deren Nutzer sich zum Ladungsaustausch verabredet haben, dieser direkt vorgenommen werden kann, ohne das Netz des Parksystems zu belasten. Hierzu ist es von Vorteil, wenn der dritten Parkplatzkategorie ein eigener Nutzerparameter zugeordnet ist. Wird der entsprechende Nutzerparameter bei im autonomen oder teilautonomen Fahrmodus fahrbaren Fahrzeugen ausgewählt, steuert das Parkplatzsteuersystem das Fahrzeug autonom im Zuge des ersten Steuerungsablaufs zu einem Parkplatz der dritten Parkplatzkategorie. Wird der entsprechende Nutzerparameter bei Fahrzeugen mit manueller Steuerung ausgewählt, dirigiert das Parkplatzsteuersystem diese mittels des Leitsystems im Zuge des zweiten Steuerungsablaufs manuell gesteuert zu einem Parkplatz der dritten Parkplatzkategorie. Um den vorstehend erwähnten Ladungsaustausch zwischen zwei Fahrzeugen gezielt vornehmen zu können ist es von Vorteil, wenn ein weiterer Nutzerparameter vorgesehen ist, der zwei definierte Fahrzeuge mit Traktionsbatterie bezeichnet, die Ladung austauschen wollen und dass bei Wahl dieses Nutzerparameters die Vergabe der Parkplätze der dritten Parkplatzkategorie oder die ladungstechnische Zuordnung von Parkplätzen der dritten Parkplatzkategorie vom Parkplatzsteuersystem so vorgenommen wird, dass ein Ladungsaustausch zwischen diesen Fahrzeugen gezielt vornehmbar ist.

Aufgrund der Unterschiedlichkeit der mit Hilfe der Nutzerparameterauswahl durch den Nutzer definierten Dienstleistung ist es von Vorteil, dass bei Einfahrt in das Parksystem, in Abhängigkeit von der Nutzerparametervorgabe oder aufgrund der mittels der Auswahlmittel getroffenen Nutzerparameterauswahl, das Parkplatzsteuerungssystem ein Angebot für den Lade- und/oder Entlade- und/oder Parkwunsch durch Anzeigemittel im Fahrzeug oder mittels mit den Auswahlmitteln gekoppelter Anzeigemittel unterbreitet. Das Angebot kann dann durch manuelle Eingabe in fahrzeugseitige Eingabemittel oder mittels Auswahlmitteln angenommen oder abgelehnt werden, so dass bei Annahme auch im rechtlichen Sinn ein Vertrag zustande kommt.

In einer praktischen Ausgestaltungsvariante ist vorteilhaft vorgesehen, dass bei mittels aufladbarer Traktionsbatterien vollständig oder teilweise elektrisch betriebener Fahrzeuge Nutzerparameter für den gewünschte Ladezustand bei Ausfahrt, die voraussichtliche Ausfahrzeit, die Freigabe freier Kapazitäten der Traktionsbatterie als Pufferspeicher, die gewünschte Parkplatzkategorie, der direkte Ladungsaustausch mit einem bestimmten Nutzer, durch Eingabe in den Parameterspeicher des Fahrzeugs oder durch Eingabe in die Auswahlmittel des Parkplatzsteuersystems als Nutzerparameter vorgebbar sind und das Parkplatzsteuersystem die Erfüllbarkeit der Nutzerparametervorgaben durch Abgleich mit einer im Parkplatzsteuersystem gespeicherten, mit jedem aufgenommenen Fahrzeug fortgeschriebenen Planung abgleicht und in Abhängigkeit vom Ergebnis die Erfüllbarkeit oder die Nichterfüllbarkeit signalisiert. Bei Erfüllbarkeit der Nutzerparametervorgaben setzt das Parkplatzsteuersystem diese um, bei Nichterfüllbarkeit oder Teilerfüllbarkeit zeigt das Parkplatzsteuersystem dies mittels Anzeigemittel im Fahrzeug oder mittels Anzeigemittel, die mit den Auswahlmittel verbunden sind, an. Durch diese Ausgestaltung wird dem Nutzer schon vor Einfahrt in das Parksystem die Möglichkeit eröffnet umzuplanen oder von einer Einfahrt in das Parksystem abzusehen.

Zur Komfortsteigerung des Parksystems kann es von Vorteil sein, eine mittels eines funkbasierten oder leitungsbasierten privaten oder öffentlichen Netzes ansprechbare interaktive Plattform vorzusehen, die mit dem Parkplatzsteuersystem steuerungstechnisch verbunden ist und über die bereits an das Parkplatzsteuersystem übermittelte Nutzerparameter durch den Nutzer änderbar sind. Hierzu kann beispielsweise bei Einfahrt in das Parksystem dem Nutzer eine Kennung übermittelt werden, unter der er sich über das funkbasierte oder leitungsbasierte private oder öffentliche Netz bei der Plattform einloggen kann. Derartige Plattformen sind zum Beispiel als Internetplattformen allgemein bekannt, so dass sich hierzu weitere Angaben erübrigen. Auch bei nachträglicher Änderung der ursprünglichen Nutzerparameter kann der Fall der Nichterfüllbarkeit der Nutzerparametervorgabe eintreten. Deshalb ist auch hier in vorteilhafter Weise vorgesehen, dass das Parkplatzsteuersystem bei Änderung von Nutzerparametern einen Abgleich mit der im Parkplatzsteuersystem gespeicherten, mit jedem aufgenommenen Fahrzeug fortgeschriebenen Planung durchführt. Abhängig vom Ergebnis des Abgleichs signalisiert das Parkplatzsteuersystem bei Änderung von Nutzerparametern über die Plattform die Erfüllbarkeit, Teilerfüllbarkeit oder Nichterfüllbarkeit der neuen Nutzerparametervorgaben dem Nutzer und unterbreitet gegebenenfalls ein neues Angebot. Bei Freigabe der Änderung und gegebenenfalls des neuen Angebots durch den Nutzer, werden die durch die neuen Nutzerparameter definierten Vorgaben vom Parkplatzsteuersystem umgesetzt. Ergänzend ist anzufügen, dass das vorstehend und nachfolgend beschriebene Parksystem selbstverständlich nicht nur für Personenkraftfahrzeuge, sondern für jede Art von motorisch angetriebenen Fahrzeugen geeignet ist.

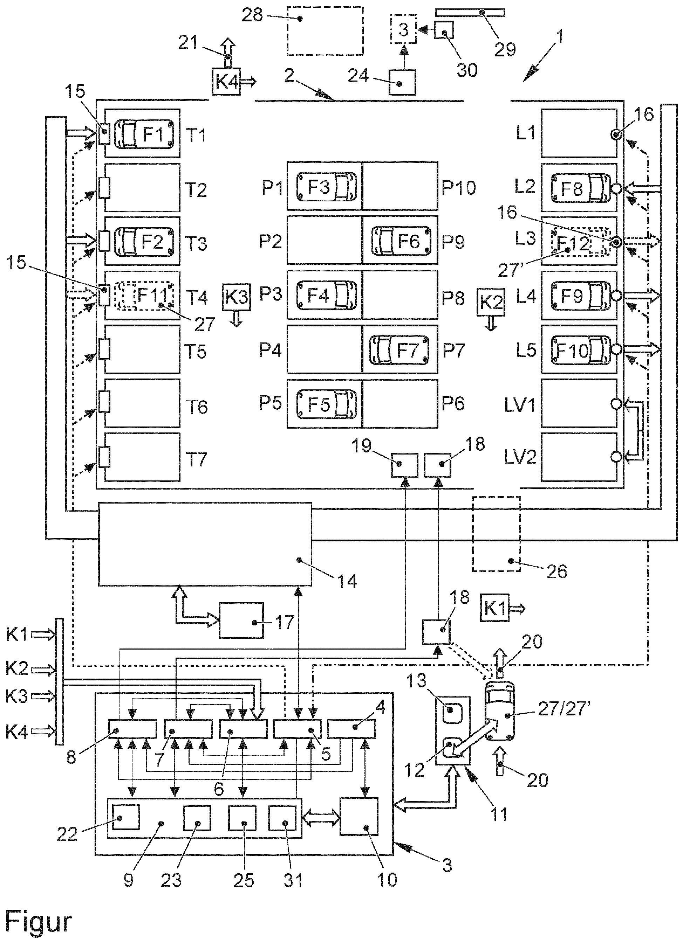

Weitere Ausgestaltungen und Vorteile der Erfindung werden nachfolgend anhand der Zeichnung näher erläutert. Es zeigt:
- Figur: eine Prinzipdarstellung eines Parksystems mit einem Parkplatzsteuersystem in Funktionsblockdarstellung.

Die einzige Figur zeigt in Prinzipdarstellung ein Parksystem 1, das von einem Parkplatzsteuersystem gesteuert wird. Dargestellt ist ein im Parksystem 1 enthaltenes Parkdeck 2 in einem Parkhaus, das vollautomatische Ladeterminals T1 bis T7 mit automatischer Ladesowie Endladefunktion, Parkplätzen P1 bis P10 ohne Lade- sowie Endladefunktion (zweite Parkplatzkategorie), Ladeparkplätze L1 bis L5 mit manueller Lade- sowie Endladefunktion (erste Parkplatzkategorie) und ladungstechnisch verbundene Stellplätze LV1, LV2 (dritte Parkplatzkategorie) aufweist. Auf dem Parkdeck 2 halten sich Fahrzeuge F1 bis F12 auf, dabei stehen die Bezeichnungen F1 bis F12 stellvertretend für einen Identifikationscode, den die Fahrzeuge bei Einfahrt in das Parksystem 1 erhalten. Näheres zum Identifikationscode ist unten ausgeführt. Ein Fahrzeug 27 / 27', dem noch kein Identifikationscode zugeteilt ist, steht im Einfahrbereich des Parksystems 1.

Um die Funktionsweise des Parksystems 1 besser erläutern zu können, sind die zum Parkplatzsteuersystem gehörenden Komponenten in die Darstellung integriert und in Funktionsblockdarstellung gezeigt. Das Parkplatzsteuerungssystem weist einen Steuerungsrechner 3 auf, dessen Steuerungsaufgaben ebenfalls in Funktionsblöcken dargestellt sind. Der Steuerungsrechner 3 enthält als Funktionsblöcke Unterscheidungsmittel 4, Leistungssteuerungsmittel 5, ein Tracking-System 6, erste Steuerungsmittel 7 für einen ersten Steuerungsablauf, zweite Steuerungsmittel 8 für einen zweiten Steuerungsablauf, Planungsmittel 9, die interne Parameter 22 enthalten und Parameterabfragemittel 10, die Nutzerparameter abfragen und in einem Parameterspeicher 31 der Planungsmittel 9 ablegen. Zur Erfüllung seiner diversen Funktionen, die durch die vorstehend angesprochenen Funktionsblöcke 4 bis 10 definiert sind, ist der Steuerungsrechner 3 mit einer Reihe von Peripherie-Einrichtungen verbunden. Um aufzuzeigen, welcher der Funktionsblöcke 4 bis 10 auf welche Peripherie-Einrichtungen zugreift, sind diese funktionalen Verbindungen in der Darstellung durch Pfeile kenntlich gemacht. Wie aus der Darstellung ersichtlich, ist ein Einfahrtterminal 11 vorgesehen, das eine Detektionseinrichtung (nicht dargestellt) für einfahrende Fahrzeuge, eine funkgestützte Kommunikationseinrichtung 12 mit normierter Kommunikationsschnittstelle, sowie Anzeige- und Eingabemittel in Form eines interaktiven Bildschirms 13 aufweist. Funktional verbunden ist das Einfahrtterminal 11 mit dem Steuerungsrechner 3 und wirkt hier insbesondere mit den Unterscheidungsmitteln 4, den Parameterabfragemitteln 10 und den Planungsmitteln 9 zusammen. Weiter ist ein Leistungsverteiler 14 vorgesehen, der die Ladeleistung verteilt. Zu diesem Zweck ist der Leistungsverteiler 14 mit Lade-Entlade-Roboter 15 einerseits und manuellen Lade-Entlade-Einrichtungen 16 andererseits verbindbar. Wie aus der Darstellung ersichtlich, ist jedem vollautomatischen Ladeterminal T1 bis T7 ein Lade-Entlade-Roboter 15 und jedem der Ladeparkplätze L1 bis L5 eine manuell zu bedienende Lade-Entlade-Einrichtung 16 zugeordnet. Aus Gründen der besseren Übersicht sind jedoch nur zwei Lade-Entlade-Roboter 15 und zwei manuelle Lade-Entlade-Einrichtungen 16 mit Bezugszeichen versehen. Der Leistungsverteiler 14 ist so gestaltet, dass er sowohl Leistung an die Lade-Entlade-Roboter 15 und die manuellen Lade-Entlade-Einrichtungen 16 liefern kann, als auch Leistung von diesen beziehen kann; in welche Richtung der Leistungstransfer aktuell verläuft, ist durch Pfeile angedeutet. Weiter ist der Leistungsverteiler 14 mit dem öffentlichen Stromnetz 17 bidirektional verbunden, er kann also sowohl vom öffentlichen Stromnetz 17 Leistung beziehen, als auch Leistung an dieses abgeben. Gesteuert wird der Leistungsverteiler 14 durch die Leistungssteuerungsmittel 5, die auch die Lade-Entlade-Roboter 15 und die manuellen Lade-Entlade-Einrichtungen 16 ansteuern, um Leistung an ein Fahrzeug abzugeben oder von diesem aufzunehmen. Um das Tracking-System 6, das im gewählten Beispiel als videogestütztes Tracking-System ausgebildet ist, mit Daten zu versorgen, sind Kameras K1 bis K4 vorgesehen, die den Einfahrbereich 20 (Kamera K1), das Parkdeck 2 (Kamera K2, K3) und den Ausfahrbereich 21 (Kamera K4) abbilden und die entsprechenden Bilddaten an das Tracking-System 6 liefern. Um im ersten Steuerungsablauf die Kontrolle über ein im autonomen oder teilautonomen Fahrmodus fahrbares Fahrzeug zu übernehmen, ist eine von den ersten Steuerungsmitteln 7 angesteuerte Funkeinrichtung 18, 18' vorgesehen, die dem jeweiligen Fahrzeug mittels der funkgestützten normierten Kommunikationsschnittstelle (nicht dargestellt) Navigationsdaten und die aktuelle Position übermittelt, letztere beziehen die ersten Steuerungsmittel 7 von dem Tracking-System 6. Es ist hier selbstverständlich vorausgesetzt, dass das Fahrzeug die übermittelten Daten autonom in Fahrbefehle umsetzen kann. Für den zweiten Steuerungsablauf sind die zweiten Steuerungsmittel 8 mit einem Leitsystem 19 verbunden, das Projektionsmittel (nicht dargestellt) ansteuert, die Lichtsignale auf den Boden des Parkdecks projizieren und so das jeweilige Fahrzeug zu seinem Bestimmungsort führen. Die zweiten Steuerungsmittel 8 beziehen dabei die aktuelle Position des Fahrzeugs vom Tracking-System 6 und steuern das Leitsystem 19 unter Berücksichtigung der aktuellen Position.

Wie bereits oben ausgeführt, halten sich die Fahrzeuge mit der Identifikation F1 bis F12 im Bereich des Parkdecks 2 auf. Aus Gründen der sprachlichen Vereinfachung ist nachfolgend nur von "Fahrzeugen F1 bis F12" die Rede, gemeint sind natürlich Fahrzeuge mit der Identifikation F1 bis F12. Die Fahrzeuge F1, F2 sind jeweils in einem vollautomatischen Ladeterminal platziert und werden mittels der jeweiligen Lade-Entlade-Roboter 15 geladen. Die Fahrzeuge F3 bis F7 sind auf Parkplätzen P1 bis P10 ohne Lade- sowie Endladefunktion abgestellt, dabei befindet sich das Fahrzeug F3 auf Parkplatz P1, das Fahrzeug F4 auf Parkplatz P3, das Fahrzeug F5 auf Parkplatz P5, das Fahrzeug F6 auf Parkplatz P9 und das Fahrzeug F7 auf Parkplatz P7. Weiter befinden sich auf den Ladeparkplätzen L1 bis L5 die Fahrzeuge F8 bis F10 und zwar auf Ladeparkplatz L2 Fahrzeug F8, das geladen wird, auf Ladeparkplatz L4 Fahrzeug F9, das entladen wird und auf Ladeparkplatz L5 Fahrzeug F10, das ebenfalls entladen wird. Die mit gestrichelter Umrisslinie angedeuteten Fahrzeuge F11 und F12 werden unten in Verbindung mit den Beispielen 1 und 2 behandelt.

Für die im Parksystem 1 befindlichen Fahrzeuge F1 bis F10 ist vorausgesetzt, dass der Steuerungsrechner 3 mittels der Parameterabfragemittel 10 die jeweiligen, den Aufenthalt im Parksystem 1 mitbestimmenden Nutzerparameter ermittelt und mittels dieser Nutzerparameter und seiner in den Planungsmittel 9 enthaltenen internen Parameter 22 eine Planung 23 erstellt hat, die den Aufenthalt der Fahrzeuge F1 bis F10 im Parksystem 1 definieren. Die Nutzerparameter betreffen im gewählten Beispiel den Typ des Fahrzeugs (autonom fahrbar oder nicht autonom fahrbar) und die Nutzervorgaben Parken, Laden bis zu einem vorgegebenen Ladezustand, Entladen bis zu einem vorgegebenen Ladezustand, Puffernutzungserlaubnis und geplante Aufenthaltsdauer im Parksystem. Die internen Parameter betreffen, bezogen auf das vorliegende Beispiel, den Ladezeitpunkt und/oder den Entladezeitpunkt und/oder den Pufferzeitpunkt, den Parkort und den Ladeort, sowie die jeweils mengenabhängigen Preise für Parken, Laden, Entladen und Puffern. Hinsichtlich der vorstehend angesprochenen Preise sind die Preise für Parken und Laden selbstverständlich Preise, die dem Nutzer in Rechnung gestellt werden und die Preise für Entladen und Puffern Preise, die dem Nutzer gutgeschrieben werden.

Weiter ist für die aktuell auf dem Parkdeck 2 befindlichen Fahrzeuge F1 bis F10 vorausgesetzt, dass das Tracking-System 6 mittels der Kamera K1 im Einfahrtbereich 20 bei Einfahrt des jeweiligen Fahrzeugs in das Parksystem 1 eine Identifizierung des jeweiligen Fahrzeugs vorgenommen hat und ein Identifizierungscode in den Planungsmitteln 9 zusammen mit den Planungsdaten für dieses Fahrzeug hinterlegt ist. Dieser Identifizierungscode wird von dem Parkplatzsteuersystem dem Nutzer übermittelt. Hinsichtlich des Übermittelns des Identifizierungscodes gibt es eine Vielzahl von Möglichkeiten, von denen nachfolgend nur zwei stellvertretend angesprochen sind. Eine einfache Möglichkeit sieht vor, dass dem Nutzer in bekannter Weise durch das Einfahrtterminal 11 ein Parkticket maschinell übergeben wird. Das Parkticket erlaubt dabei dem Nutzer den Zugang zur Parkplatzsteuerung, um zum Beispiel über ein Terminal 24, das mit dem Steuerungsrechner 3 verbunden ist, Nutzerparameter zu ändern oder die vom Parksystem erbrachte Dienstleistung (zum Beispiel Parken, Laden) und/oder die an das Parksystem erbrachte Dienstleistung (Entladen, Puffern) abzurechnen. Eine andere Möglichkeit der Übermittlung des Identifizierungscodes kann darin bestehen, dem Nutzer auf funktechnischem Weg oder über ein funkbasiertes öffentliches Netz einen Identifizierungscode auf ein mobiles Gerät, zum Beispiel ein Smartphone zu übermitteln. In diesem Fall ist das Smartphone der Zugang zur Parkplatzsteuerung, um Parameter zu ändern oder Dienstleistungen abzurechnen. Seitens des Parkplatzsteuersystems ist in diesem Fall eine entsprechende funktechnische Einrichtung (nicht dargestellt) und/oder Netzanbindung (nicht dargestellt) vorgesehen.

Was die Abrechnung von Dienstleistungen angeht, so kann diese wie vorstehend angesprochen zum Beispiel über das Terminal 24, das mit dem Steuerungsrechner 3 verbunden ist oder über ein Smartphone (nicht dargestellt) in heute gebräuchlicher Weise vorgenommen werden. Der Status "bezahlt" oder "nicht bezahlt" ist zu dem entsprechenden Identifikationscode in einem Statusspeicher 25 der Planungsmittel 9 hinterlegt.

Die Funktionsweise des vorstehend beschriebenen Parksystems ist nachfolgend beispielhaft erläutert.

### Beispiel 1

In diesem Beispiel 1 wird vorausgesetzt, dass das in das Parksystem 1 einfahrende Fahrzeug 27 ein Fahrzeug mit Traktionsbatterie ist und eine aktivierte Kommunikationseinrichtung mit normierter Kommunikationsschnittstelle und einen mit dem Parkplatzsteuersystem kompatiblen und aktivierten autonomen oder teilautonomen Fahrmodus aufweist. Es handelt sich somit um ein Fahrzeug, das nach der hier verwendeten Terminologie der ersten Kategorie zuzurechnen ist, es kann demnach nur auf einem Parkplatz der zweiten Parkplatzkategorie oder an einem vollautomatischen Ladeterminal platziert werden. In einem fahrzeugseitigen Speicher (nicht dargestellt) sind für dieses Beispiel als Nutzervorgaben die Nutzerparameter Parken, Laden bis zu einem vorgegebenen Ladezustand, keine Puffernutzungserlaubnis sowie die geplante Aufenthaltsdauer im Parksystem abgelegt.

Bei Einfahrt in das Parksystem 1 wird im Einfahrbereich 20 durch die Unterscheidungsmittel 4 das einfahrende Fahrzeug 27 über eine entsprechende Sensorik im Einfahrtterminal 11 detektiert. Durch die Unterscheidungsmittel 4 werden die Parameterabfragemittel 10 aktiviert. Diese initiieren daraufhin mittels der funkgestützte Kommunikationseinrichtung 12 mit normierter Kommunikationsschnittstelle eine Kommunikationsroutine. Nachdem es zu einem Kommunikationsdialog mit der in dem einfahrenden Fahrzeug 27 vorhandenen gleichartigen Kommunikationseinrichtung (nicht dargestellt) gekommen ist, fragen im Zuge dieser Kommunikationsroutine die Parameterabfragemittel 10 die Daten zur autonomen Fahrfähigkeit des Fahrzeugs ab und übermitteln diese an die Unterscheidungsmittel 4, die daraufhin das Fahrzeug 27 der ersten Kategorie zuordnen und mittels der ersten Steuerungsmittel 7 einen ersten Steuerungsablauf aktivieren. Weiter ermitteln die Parameterabfragemittel 10 aus einem fahrzeuginternen Speicher (nicht dargestellt) die Nutzerparameter, die der Nutzer des Fahrzeugs im Vorfeld festgelegt hat und übergeben diese an die Planungsmittel 9. Die Planungsmittel 9 errechnen aus der bestehenden Planung 23 und internen Parametern 22 eine neue Planung 23, die den Aufenthalt des Fahrzeugs 27 im Parksystem 1 zeitbezogen mit Ladeort, Ladezeit, Lademenge, Parkort, Parkzeit, definiert. Es wird hier angenommen, dass die Nutzerparameter erfüllbar sind, deshalb übermitteln die Planungsmittel 9 ein Angebot an das Einfahrterminal 11 und dieses überträgt das Angebot mittels der funkgestützten Kommunikationseinrichtung 12 an die Fahrzeugsteuerung (nicht dargestellt) im Fahrzeug 27, die das Angebot im Fahrzeug auf einem Display (nicht dargestellt) anzeigt und zur Annahme des Angebotes auffordert. Erfolgt die Annahme durch den Nutzer, was im Rahmen des Beispiels 1 angenommen wird, veranlassen die Steuermittel 7 im Zuge des ersten Steuerungsablaufs die Identifizierung des Fahrzeugs mittels des Tracking-Systems 6 durch Auswertung der von der Kamera K1 gelieferten Bilder, ordnen dem Fahrzeug den Identifizierungscode F11 zu und übermitteln diesen Identifizierungscode "F11" an die Planungsmittel 9, die alle Daten zu diesem Fahrzeug diesem Identifizierungscode "F11" zuordnet. Weiter veranlassen die ersten Steuermittel 7 im Rahmen des ersten Steuerungsablaufs, dass vom Einfahrterminal 11 ein Parkticket mit dem Identifikationscode "F11" maschinell an den Nutzer des Fahrzeugs 27 auszugeben ist und übernehmen die Kontrolle über das Fahrzeug 27. Im Zuge der Kontrollübernahme übermitteln die ersten Steuermittel 7 mittels der Funkeinrichtungen 18, 18' dem Fahrzeug 27 die notwendigen Navigationsdaten zum Anfahren des Übergabepunktes 26, sowie den Fahrbefehl zum Übergabebereich 26 und den Stoppbefehl am Übergabebereich 26. Daraufhin fährt das Fahrzeug F1 den Übergabebereich 26 autonom an und stoppt dort, um die Passagiere aussteigen zu lassen. Im nächsten Schritt des ersten Steuerablaufs beziehen die ersten Steuermittel 7 von den Planungsmitteln 9 den nächsten anzufahrenden Punkt, im gewählten Beispiel sei dies das Terminal T4. Daraufhin übermitteln die ersten Steuermittel 7 mittels der Funkeinrichtungen 18, 18' die notwendigen Navigationsdaten zum Anfahren des Terminals T4, sowie den Fahrbefehl zum Terminal T4 und den Stoppbefehl am Terminal T4 an das Fahrzeug 27, das nach Freigabe durch den Nutzer des Fahrzeugs 27 (zum Beispiel durch Abschließen des Fahrzeugs) das Terminal T4 anfährt. Das ordnungsgemäße Anfahren und Erreichen des Terminals T4 wird dabei im Rahmen des ersten Steuerungsablaufs von den ersten Steuermittel 7 unter Zuhilfenahme des Tracking-Systems 6 sowie der daran angeschlossenen Kameras K1 bis K4 überwacht. An Terminal T4 ist das Fahrzeug 27 in gestrichelter Linie dargestellt. Nachdem die ersten Steuermittel 7 das ordnungsgemäße Erreichen des Terminals T4 registriert haben, übermitteln die ersten Steuermittel 7 im Rahmen des ersten Steuerablauf durch entsprechendes Ansteuern der Leistungssteuerungsmittel 5 dem Lade-Entlade-Roboter 15 den Befehl, eine Ladeverbindung mit dem Fahrzeug 27 herzustellen. Dies wird vom Lade-Entlade-Roboter 15 autonom durchgeführt. Zu welchem Zeitpunkt das Laden des Fahrzeugs 27 erfolgt, ist in der Planung 23 vorgegeben. Ist der Startzeitpunkt für den Ladevorgang erreicht, veranlassen die Planungsmittel 9 über die ersten Steuermittel 7 und die Leistungssteuerungsmittel 5 das Laden des Fahrzeugs 27. Ob die dazu notwendige Ladeleistung dem öffentlichen Netz 17 entnommen wird oder einem der im Parksystem 1 befindlichen, an einem Lade-Entlade-Roboter 15 oder einer manuellen Lade-Entlade-Einrichtungen 16 angeschlossenen Fahrzeuge, bestimmen die Planungsmittel 9 in Abhängigkeit von den internen Parametern 22 und den Nutzerparameter im Nutzerparameterspeicher 31, indem die Planungsmittel 9 entsprechende Vorgaben an die Leistungssteuerungsmittel 5 übermitteln, die wiederum den Leistungsverteiler 14 entsprechend steuern.

Unter der Annahme, dass der vorgegebene Ladezustand des Fahrzeugs 27 erreicht ist und das Fahrzeug 27 noch nicht vom Nutzer angefordert wurde, kann es je nach vorliegender Planung erforderlich sein, das vollautomatische Ladeterminal T4 zu räumen. In diesem Fall erfolgt unter Zuhilfenahme des ersten Steuerungsablaufs ein Umparken des Fahrzeugs 27 auf einen der Parkplätze ohne Lade-Entlade-Einrichtung, zum Beispiel auf den Parkplatz P4. Der Transfer des Fahrzeugs 27 läuft dabei steuerungstechnisch analog zum Transfer vom Übergabebereich 26 zum vollautomatischen Ladeterminal T4 ab, so dass sich eine nochmalige Beschreibung der steuerungstechnischen Gegebenheiten erübrigt.

Wird das Fahrzeug 27 vor dem Erreichen des gewünschten Ladezustandes vom Nutzer angefordert, indem dieser das Parkticket in eine Leseeinrichtung (nicht dargestellt) des Terminals 24 einführt, wird ihm über dieses der aktuelle Ladezustand und die Zeit bis zum Erreichen des gewünschten Ladezustands angezeigt. Der Nutzer hat nun die Wahl, das Fahrzeug 27 sofort anzufordern oder die Zeit bis zum Erreichen des gewünschten Ladezustandes abzuwarten.

Fordert der Nutzer das Fahrzeug an, wird am Terminal 24 gesteuert vom Steuerrechner 3 ein Bezahlvorgang initiiert und nach erfolgter Bezahlung ein entsprechender Status im Statusspeicher 25 der Planungsmitteln 9 hinterlegt. Diese aktivieren durch entsprechendes Ansteuern der Steuermittel 7 den ersten Steuerungsablauf mit der Maßgabe, das Fahrzeug 27 von seinem aktuellen Platz zum Übernahmebereich 28 überzuführen. Auch hier läuft der Transfer des Fahrzeugs 27 steuerungstechnisch analog zum Transfer vom Übergabebereich 26 zum vollautomatischen Ladeterminal T4 ab, so dass sich eine nochmalige Beschreibung der steuerungstechnischen Gegebenheiten erübrigt. Mit dem Öffnen des Fahrzeugs 27 durch den Nutzer wird die Fahrzeugidentifikation F11 aus der Planung 23 entfernt und es werden alle der Fahrzeugidentifikation F11 zugehörigen Daten gelöscht.

In Abweichung zu dem im vorstehenden Beispiel 1 dargestellten Steuerungsablauf kann natürlich, abhängig davon was die Planung 23 vorgibt, ein in das Parksystem einfahrendes Fahrzeug der vorstehend beschrieben Art zuerst an einen Parkplatz ohne Lade-Entlademöglichkeit gesteuert werden. Nach dem Zwischenparken erfolgt dann der Transfer zu einem vollautomatischen Ladeterminal und nach dem Laden oder Entladen der Transfer wieder zurück an einen Parkplatz ohne Lade- Entlademöglichkeit. Dieser Vorgang kann sich natürlich auch mehrfach wiederholen, zum Beispiel wenn der Nutzerparameter "Pufferfreigabe" gesetzt ist. Das jeweilige Versetzen des Fahrzeugs erfolgt steuerungstechnisch analog zum vorstehend beschriebenen Versetzen vom Übergabebereich 26 zum Terminal T4, bzw. vom Terminal T4 zu einem Parkplatz ohne Lade- Entlademöglichkeit, so dass sich auch hier ein nochmaliges Beschreiben erübrigt.

### Beispiel 2

Im Beispiel 2 wird wiederum das im Einfahrbereich 20 stehende Fahrzeug betrachtet, das in diesem Fall mit Fahrzeug 27' bezeichnet ist, die Betrachtung erfolgt jedoch unter anderen Voraussetzungen. Es ist angenommen, dass es sich bei dem Fahrzeug 27' um ein Fahrzeug mit Traktionsbatterie handelt, das entweder keine Kommunikationseinrichtung mit normierter Kommunikationsschnittstelle besitzt oder dessen Kommunikationseinrichtung deaktiviert wurde.

Das Fahrzeug ist demnach im Sinne der hier verwendeten Terminologie der zweiten Kategorie zuzuordnen, ist also nur manuell steuerbar und eine Auswahl der Nutzerparameter kann nur manuell erfolgen. Platziert werden kann das Fahrzeug parameterabhängig auf Parkplätzen aller drei Parkplatzkategorien.

Bei Einfahrt in das Parksystem 1 im Einfahrbereich 20 wird durch die Unterscheidungsmittel 4 das einfahrende Fahrzeug 27' über eine entsprechende Sensorik im Einfahrtterminal 11 detektiert. Durch die Unterscheidungsmittel 4 werden die Parameterabfragemittel 10 aktiviert. Diese aktivieren daraufhin die funkgestützte Kommunikationseinrichtung 12 mit normierter Kommunikationsschnittstelle, die daraufhin eine Kommunikationsroutine startet. Da das Fahrzeug 27' keine Kommunikationseinrichtung mit normierter Kommunikationsschnittstelle besitzt oder diese deaktiviert wurde, kommt kein Kommunikationsdialog zustande. Dies erkennt das Einfahrtterminal 11 und gibt ein entsprechendes Signal an die Unterscheidungsmittel 4, die daraufhin den zweiten Steuerungsablauf mittels der zweiten Steuermittel 8 initiieren und die Parameterabfragemittel 10 veranlassen, über den interaktiven Bildschirm 13 des Einfahrtterminals 11 einen Parameterabfragedialog aufzusetzen. Im Zuge der Parameterabfrage gibt der Nutzer die Nutzerparameter ein und schließt den Vorgang durch entsprechende Eingabe ab.

Es wird im Rahmen dieses Beispiels angenommen, dass der Nutzer eine lange Aufenthaltsdauer im Parksystem angegeben hat, bei Ausfahrt weniger Ladung benötigt als aktuell in der Traktionsbatterie vorhanden ist. Weiter wird angenommen, dass die Planungsmittel 9 die Erfüllbarkeit der Nutzerparameter ermitteln, ein entsprechendes Angebot auf dem interaktiven Bildschirm 13 anzeigen und zu dessen Annahme aufgefordert haben. Die Annahme des Angebotes erfolgt durch den Nutzer, indem dieser ein entsprechend gekennzeichnetes Feld auf dem interaktiven Bildschirm 13 berührt.

Mit der Annahme des Angebotes veranlassen die zweiten Steuermitteln 8 im Zuge des zweiten Steuerungsablaufs die Identifizierung des Fahrzeugs 27 mittels des Tracking-Systems 6 durch Auswertung der von der Kamera K1 gelieferten Bilder, ordnen dem Fahrzeug den Identifizierungscode F12 zu und übermitteln diesen Identifizierungscode "F12" an die Planungsmittel 9, die alle Daten zu diesem Fahrzeug diesem Identifizierungscode "F12" zuordnen. Im Zuge des zweiten Steuerungsablaufs wird dann durch die zweiten Steuermittel 8 das Einfahrtterminal 11 so angesteuert, dass dieses ein Parkticket mit dem Identifikationscode "F12" maschinell an den Nutzer des Fahrzeugs 27' ausgibt.

Ebenfalls mit der Annahme des Angebotes ermitteln die Planungsmittel 9 unter Zuhilfenahme der aktuellen Planung 23, den Nutzerparametern und den internen Parametern 22 eine neue aktuelle Planung 23, die den Aufenthalt des Fahrzeugs 27' im Parksystem 1 zeitbezogen definiert. Der zweite Steuerungsablauf fragt den Lade-Entladeort für das Fahrzeug 27' durch Ansprechen der Planungsmittel 9 aus der aktuellen Planung 23 ab und aktiviert das Leitsystem 19, das mittels entsprechender Anzeigemittel, zum Beispiel Projektionsmittel (nicht dargestellt), den Weg zum zugeteilten Ladeparkplatz - hier dem Ladeparkplatz L3 - auf die Fahrbahn projiziert und den Nutzer auffordert, diesen Hinweisen zu folgen. Der Nutzer steuert nun den Hinweisen folgend manuell den Ladeparkplatz L3 an und parkt dort. Die manuelle Fahrt wird im Rahmen des zweiten Steuerungsablaufs unter Zuhilfenahme des Tracking-Systems 6 verfolgt. Weicht der Nutzer von der durch die Hinweise vorgegebenen Route ab, berechnen die zweiten Steuermittel 8 unter Zuhilfenahme der durch das Tracking-System 6 zur Verfügung gestellten aktuellen Position im Rahmen des zweiten Steuerablaufs eine neue Route, die zum Ladeplatz L2 führt. Bei wiederholtem Abweichen von der durch die Hinweise vorgegebenen Route oder bei Parken auf einem anderen als dem vorgegebenen Platz kann im Rahmen des zweiten Steuerungsablauf ein Alarm auslösbar sein und/oder es kann unter Zuhilfenahme des Leitsystems und der Projektionseinrichtung (nicht dargestellt) ein Hinweis an den Nutzer ausgegeben werden, dass das Fahrzeug kostenpflichtig entfernt wird.

Hat das Fahrzeug 27' den Ladeplatz L3 erreicht - in der Darstellung ist dies durch eine in Strichlinie angedeutete Kontur des Fahrzeugs 27' angedeutet - und hat der Nutzer die Verbindung zu der manuellen Lade-Entlade-Einrichtungen 16 manuell hergestellt, registrieren dies die zweiten Steuerungsmittel 8 über das Trackingsystem 6, sowie über die Leistungssteuerungsmittel 5 und unterbrechen den zweiten Steuerungsablauf. Die Unterbrechung dauert so lange, bis die Planungsmittel 9 aufgrund der Zeitvorgaben durch die Planung 23 den zweiten Steuerungsablauf durch entsprechendes Ansprechen der zweiten Steuermittel 8 fortsetzen. Da im vorliegenden Beispiel 2 ja die Kapazität der Traktionsbatterie, die den gewünschten Ladezustand bei Ausfahrt aus dem Parksystem 1 übersteigt, durch Nutzerparametervorgabe zur Pufferung von Ladung freigegeben ist, besteht das Fortsetzen des zweiten Steuerungsablaufs in Lade- bzw. Entladevorgängen. Das Entladen erfolgt dabei stets so, dass der durch Nutzerparametervorgabe gewünschte Ladezustand nicht unterschritten wird. Das Puffern von Ladung wird rechtzeitig vor dem Zeitpunkt beendet, der über die Nutzerparameter in der Planung 23 hinterlegt ist.

Wird das Fahrzeug 27' vor dem Erreichen des in der Planung 23 hinterlegten Abholzeitpunktes vom Nutzer angefordert, indem dieser das Parkticket in eine Leseeinrichtung (nicht dargestellt) des Terminals 24 einführt, wird ihm über dieses der aktuelle Ladezustand und gegebenenfalls die Zeit bis zum Erreichen des gewünschten Ladezustands angezeigt. Der Nutzer hat nun die Wahl, das Fahrzeug 27' sofort anzufordern und die Kosten für die überschüssige Ladung zu übernehmen oder die Zeit bis zum Erreichen des gewünschten Ladezustandes abzuwarten.

Fordert der Nutzer das Fahrzeug an, wird am Terminal 24 gesteuert vom Steuerrechner 3 ein Bezahlvorgang initiiert und nach erfolgter Bezahlung ein entsprechender Status im Statusspeicher 25 der Planungsmitteln 9 hinterlegt. Der Nutzer kann nun die Ladeverbindung (nicht dargestellt) zwischen dem Fahrzeug 27' und der manuellen Lade-Entlade-Einrichtungen 16 trennen und den allgemeinen Hinweisen "Ausfahrt" folgend das Parksystem verlassen. Um aus dem Parksystem ausfahren zu können ist in bekannter Weise das Passieren einer Schranke 29 vorgesehen, die mit einem Ausfahrterminal 30 gekoppelt ist. Durch das Einführen des als bezahlt gekennzeichneten Parktickets in eine maschinelle Leseeinrichtung (nicht dargestellt) des mit dem Steuerrechner 3 verbundenen Ausfahrtterminals 30 kann die Schranke 29 geöffnet werden. Mit dem Öffnen der Schranke wird die Fahrzeugidentifikation F12 aus der Planung entfernt und es werden alle der Fahrzeugidentifikation F12 zugehörigen Daten gelöscht.

Abweichend vom vorstehend beschriebenen Beispiel 2 kann es sich bei dem Fahrzeug 27' auch um ein Fahrzeug handeln, das zwar eine aktivierte Kommunikationseinrichtung mit normierter Kommunikationsschnittstelle aufweist, die im Lauf des Kommunikationsdialogs die Nutzerparameter übermittelt, bei dem aber der autonome oder teilautonome Fahrmodus deaktiviert, nicht vorhanden oder nicht kompatibel mit dem Parkplatzsteuersystem ist. In diesem Fall wird zwar die Übernahme der Nutzerparameter automatisch vorgenommen, wie im Beispiel 1, der übrige Ablauf nach Annahme des Angebotes entspricht aber dem Steuerungsablauf nach Beispiel 2. Es findet also eine Kombination der beiden Steuerungsabläufe statt.

### Beispiel 3

Wie oben erwähnt, besteht mittels des Parksystems 1 auch die Möglichkeit, Ladung gezielt zwischen zwei Fahrzeugen auszutauschen. In diesem Fall ist es erforderlich, dass der Wunsch nach einem direkten Ladungsaustausch mittels eines Nutzerparameters definiert ist und weiter eine Information vorliegt, zwischen welchen Fahrzeugen Ladung direkt ausgetauscht werden soll. Diese Information kann als weiterer Nutzerparameter dem Steuerrechner zur Verfügung gestellt werden und in einem Code bestehen, der zwischen den austauschwilligen Nutzern vereinbart ist.

Wie aus der Darstellung ersichtlich und oben beschrieben, sind auf dem Parkdeck 2 zwei ladungstechnisch verbundene Stellplätze LV1, LV2 (dritte Parkplatzkategorie) vorgesehen. Um diese ladungstechnisch verbundenen Stellplätze LV1, LV2 zu nutzen, haben sich zwei Nutzer unter Vereinbarung eines Codes verabredet und fahren nacheinander in das Parksystem 1 ein, die einfahrenden Fahrzeuge sind in der Darstellung nicht gezeigt. Es ist hier angenommen, dass es sich um Fahrzeuge der Kategorie zwei, also ohne autonome Fahrfunktion handelt. Die Einfahrprozedur ist damit jeweils im Wesentlichen identisch zu der in Beispiel 2 beschriebenen, lediglich die Eingabe der Nutzerparameter für "Ladung direkt austauschen" und der Nutzerparameter "Identifizierungscode" sind in der oben beschriebenen Weise einzugeben. Im Übrigen läuft das Platzieren des einen Fahrzeuges (nicht dargestellt) auf dem Stellplatz LV1 und des anderen Fahrzeugs (nicht dargestellt) auf dem Stellplatz LV2 jeweils steuerungstechnisch ebenso ab, wie oben in Verbindung mit dem Fahrzeug 27' im Beispiel 2 beschrieben, so das sich diesbezüglich eine Wiederholung erübrigt. Haben die Fahrzeuge die ladungstechnisch verbundenen Stellplätze LV1, LV2 erreicht, ist das weitere Prozedere zum Ladungsaustausch manuell auszuführen, das Parkplatzsteuersystem nimmt darauf keinen Einfluss. Die Ausfahrt aus dem Parksystem 1 erfolgt dann ebenso wie zu Beispiel 2 beschrieben.

Eine zweite Variante eines Ladungsaustauschs kann zwischen zwei Fahrzeugen (nicht dargestellt) der ersten Fahrzeugkategorie erfolgen, also zwischen Fahrzeugen, die durch das Parkplatzsteuersystem autonom steuerbar sind. In diesem Fall ist der steuerungstechnische Ablauf mit dem in Beispiel 1 beschriebenen im Wesentlichen identisch, es ist lediglich erforderlich, dass der Nutzerparameter für "Ladung direkt austauschen" und der Nutzerparameter "Identifizierungscode" in dem fahrzeugseitigen Parameterspeicher gesetzt ist und in diesem Fall ein weiterer Parameter vorgegeben ist, der den Umfang des Ladungsaustausches definiert. Die Fahrzeuge (nicht dargestellt) werden dann, analog zum Beispiel 1, zunächst zum Übergabebereich 26 und von dort zu einem der vollautomatischen Ladeterminals T1 bis T7 gesteuert. Nach Rückmeldung, dass die Position erreicht ist, werden die Fahrzeuge mittels des Laderoboters an den Leistungsverteiler 14 angeschlossen. Die Leistungssteuerungsmittel 5 organisieren dann den direkten Ladungsaustausch. Die Ausfahrt nach Anforderung durch den Nutzer oder ein vorheriges eventuelles Umparken erfolgt ebenfalls wie im Beispiel 1 beschrieben.

Selbstverständlich können auch Fahrzeuge ohne Traktionsbatterie oder mit Traktionsbatterie aber ohne Lade- bzw. Entladewunsch und ohne Puffererlaubnis in das Parksystem 1 einfahren. Da in diesem Fall nur ein Parkwunsch besteht, werden Fahrzeuge mit aktivem zum Parkplatzsteuersystem kompatiblem autonomen oder teilautonomen Fahrmodus analog zum steuerungstechnischen Ablauf nach Beispiel 1 behandelt und zum Parken zu einem der Parkplätze P1 bis P10 gesteuert. Nach Anforderung durch den Nutzer erfolgt das Ausschleusen aus dem Parksystem 1 ebenfalls wie im Beispiel 1 beschrieben. Fahrzeuge die der zweiten Fahrzeugkategorie angehören, also keine autonome Fahrfähigkeit aufweisen, werden hinsichtlich des steuerungstechnischen Ablaufs so behandelt, wie in Beispiel 2 beschrieben, indem das Fahrzeug zum Parken zu einem der Parkplätze P1 bis P10 ohne Lade- Entlade-Einrichtung geleitet wird. Die Ausfahrt nach Anforderung durch den Nutzer erfolgt ebenfalls wie im Beispiel 2 beschrieben.

Weiter versteht es sich von selbst, dass sich das Parksystem 1, das gemäß der Darstellung nur ein Parkdeck 2 aufweist, auch über eine Vielzahl von miteinander verbundenen Parkdecks erstrecken kann, wobei nicht auf jedem der Parkdecks vollautomatische Ladeterminals oder Parkplätze aller Parkplatzkategorien vorhanden sein müssen. Darüber hinaus ist das Parksystem 1 auch nicht auf die Aufnahme von Personenkraftfahrzeugen beschränkt, es kann selbstverständlich auch so ausgebildet sein, dass Nutzfahrzeuge aufgenommen werden können.

Wie oben angesprochen, werden bei Fahrzeugen mit Traktionsbatterie durch Nutzerparameter die Aufenthaltsdauer, ein Lade- oder Entladewunsch und die Pufferfreigabe festgelegt, die Festlegung der Ladezeitpunkte und Entladezeitpunkte innerhalb der vorgegebenen Aufenthaltsdauer erfolgt jedoch in Abhängig von internen Parametern 22 durch die Planungsmittel 9. Diese internen Parameter 22 können unterschiedlichen Prämissen folgen. So ist es beispielsweise denkbar, dass die Prämisse darin besteht, möglichst viel der mit Ladewunsch in das Parksystem 1 eingefahrenen Fahrzeuge dann aufzuladen wenn, andere im Parksystem 1 befindliche Fahrzeuge entladen werden, die mit einem Entladewunsch in das Parksystem 1 eingefahren sind, so das möglichst viel Ladungstransfer innerhalb des Parksystems abgedeckt werden kann. Steht hingegen als Prämisse die Pufferung des öffentlichen Netzes 17 im Vordergrund, wird die Festlegung der internen Parameter so erfolgen, dass, zu Zeiten des Überangebotes elektrischer Energie im öffentlichen Netz, Ladung durch die Fahrzeuge im Parksystem 1 aufgenommen wird, die einen Ladewunsch signalisiert haben oder ihren Puffer freigegeben haben, während zu Zeiten in denen ein Unterangebot an elektrischer Energie im öffentlichen Netz besteht, die im Parksystem 1 befindlichen Fahrzeuge, die einen Entladewunsch haben oder deren Puffer geladen ist, ihre Energie abgeben, so dass das Parksystem Energie ins öffentliche Netz liefern kann. Eine weitere Prämisse kann darin bestehen das Parksystem 1 als Handelsplattform auszubilden, so dass Angebot und Nachfrage den Preis für eine Kilowattstunde an transferierter Ladung bestimmen. In einem solchen Fall können durch die Nutzer, ebenso wie durch das Parksystem, Preisgrenzen festgelegt werden, innerhalb der eine Abgabe von Ladung oder eine Aufnahme von Ladung zulässig ist. Derartige Preisgrenzen wären dann mittels Nutzerparameter einerseits und mittels interner Parameter andererseits festzulegen.

Selbstverständlich sind neben den vorstehend angesprochenen Prämissen auch andere Prämissen denkbar oder Mischformen der vorstehend genannten Prämissen. In allen Fällen dienen diese dazu, die internen Parameter 22 der Planungsmittel 9 festzulegen, so dass die Planung 23 stets unter Berücksichtigung der jeweiligen Prämissen erfolgt.

### Bezugszeichenliste

- 1: Parksystem
- 2: Parkdeck
- 3: Steuerrechner
- 4: Unterscheidungsmittel
- 5: Leistungssteuerungsmittel
- 6: Tracking-System
- 7: erster Steuerungsablauf
- 8: zweiter Steuerungsablauf
- 9: Planungsmittel
- 10: Parameterabfragemittel
- 11: Einfahrtterminal
- 12: funkgestützte Kommunikationseinrichtung
- 13: interaktiver Bildschirm
- 14: Leistungsverteiler
- 15: Lade-Entlade-Roboter
- 16: manuelle Lade-Entlade-Einrichtung
- 17: öffentliches Stromnetz
- 18: Funkeinrichtungen
- 19: Leitsystem
- 20: Einfahrbereich
- 21: Ausfahrbereich
- 22: interne Parameter
- 23: Planung
- 24: Terminal
- 25: Statusspeicher
- 26: Übergabebereich
- 27: Fahrzeug (Beispiel 1)
- 27': Fahrzeug (Beispiel 2)
- 28: Übernahmebereich
- 29: Schranke
- 30: Ausfahrterminal

- F1 bis F12: Fahrzeugidentifikation
- T1 bis T7: vollautomatische Ladeterminals
- P1 bis P10: Parkplätze ohne Lade- sowie Endladefunktion (zweite Parkplatzkategorie)
- L1 bis L5: Ladeparkplätze (erste Parkplatzkategorie)
- LV1, LV2: ladungstechnisch verbundene Stellplätze (dritte Parkplatzkategorie)
- K1 bis K4: Kamera

## Patentansprüche

1. Parksystem mit einer Mehrzahl von Parkplätzen für Fahrzeuge, wobei
- ein Parkplatzsteuersystem vorgesehen ist, das Unterscheidungsmittel (4) aufweist, die in das Parksystem (1) einfahrende Fahrzeuge (27, 27') detektieren und in einer Abfrage zumindest feststellen, ob das jeweilige Fahrzeug (27, 27') einen mit dem Parkplatzsteuersystem kompatiblen autonomen oder teilautonomen Fahrmodus aufweist, und Fahrzeuge (27), die eine solchen kompatiblen autonomen oder teilautonomen Fahrmodus aufweisen, einer ersten Kategorie und alle übrigen Fahrzeuge einer zweiten Kategorie zuordnet,
- das Parkplatzsteuersystem bei Fahrzeugen (27) der ersten Kategorie im Zuge eines ersten Steuerungsablaufs die Kontrolle übernimmt und im autonomen oder teilautonomen Fahrmodus die Fahrzeuge parameterabhängig autonom zu einem Parkplatz (P1 bis P10) einer zweiten Kategorie ohne Lademöglichkeit oder zu einem vollautomatischen Ladeterminal (T1 bis T7) mit vollautomatischer Lade- und/oder Entladefunktion steuert,
- das Parkplatzsteuersystem Fahrzeuge (27') der zweiten Kategorie im Zuge eines zweiten Steuerungsablaufs unter Zuhilfenahme eines Leitsystems (19) parameterabhängig manuell gesteuert zu einem Parkplatz (L1 bis L5) einer ersten Parkplatzkategorie mit manueller Lademöglichkeit und/oder Entlademöglichkeit oder zu einem Parkplatz (P1 bis P10) der zweiten Kategorie ohne Lademöglichkeit leitet,
- das Parkplatzsteuersystem die Parametervorgaben des Nutzers als Nutzerparameter abfragt und in einem Nutzerparameterspeicher (31) speichert und Vorgaben des Parksystems (1) als interne Parameter (22) beinhaltet,
**dadurch gekennzeichnet,**
**dass** eine dritte Parkplatzkategorie vorgesehen ist, die wenigstens zwei Stellplätze umfasst, und dass die Stellplätze der dritten Parkplatzkategorie mit einer Lade- und/oder Entladeeinrichtung so ausgestattet sind, dass ein Fahrzeug auf einem der Parkplätze dieser dritten Parkplatzkategorie mit wenigstens einem anderen Fahrzeug auf einem anderen Parkplatz dieser dritten Parkplatzkategorie Ladung direkt austauschen kann.

2. Parksystem nach Anspruch 1, **dadurch gekennzeichnet, dass** die Nutzerparameter wenigstens eine der Nutzervorgaben Fahrzeugtyp, Parken, Laden, Entladen, Puffernutzung, Aufenthaltsdauer im Parksystem, Preisvorgaben für Laden, Entladen, Puffernutzung enthalten.

3. Parksystem nach Anspruch 1, **dadurch gekennzeichnet, dass** die internen Parameter wenigstens eine der Parksystemvorgaben Ladezeitpunkt, Entladezeitpunkt, Pufferzeitpunkt, Parkort, Ladeort enthalten.

4. Parksystem nach Anspruch 1, **dadurch gekennzeichnet, dass** die Nutzervorgaben dem Parkplatzsteuersystem auf wenigstens einem der Wege
- funktechnische Verbindung eines Parameterspeichers im Fahrzeug über eine normierte Schnittstelle mit dem Parkplatzsteuersystem,
- manuelle Eingabe in mit dem Parkplatzsteuersystem verbundene Auswahlmittel,
- manuelle Eingabe über ein mobiles Handgerät unter Nutzung eines öffentlichen Netzes
übermittelbar sind.

5. Parksystem nach Anspruch 4, **dadurch gekennzeichnet, dass** das Parkplatzsteuersystem Parameterabfragemittel (10) enthält, mittels der es feststellt, ob gemäß der in einem fahrzeugseitigen Parameterspeicher gespeicherten Nutzerparameter ein Fahrzeug geparkt und/oder geladen und/oder entladen werden soll und/oder ob freie Kapazitäten einer Traktionsbatterie als Pufferspeicher für elektrische Ladung verfügbar sind und wie lange das Fahrzeug zur Verfügung steht und die Nutzerparameter in einem Nutzerparameterspeicher (31) speichert.

6. Parksystem nach Anspruch 4, **dadurch gekennzeichnet, dass** das Parkplatzsteuersystem Auswahlmittel enthält, mittels der manuell auswählbar ist, ob ein Fahrzeug geparkt und/oder geladen und/oder entladen werden soll und/oder ob freie Kapazitäten einer Traktionsbatterie als Pufferspeicher für elektrische Ladung verfügbar sind und wie lange das Fahrzeug zur Verfügung steht und dass diese Angaben die Nutzerparameter darstellen, mittels der Parameterabfragemittel (10) abgefragt und in einem Nutzerparameterspeicher (31) speichert werden.

7. Parksystem nach Anspruch 1, **dadurch gekennzeichnet, dass** das Parkplatzsteuersystem ein Fahrzeug-Tracking-System (6) und das Leitsystem (19) Anzeigemittel enthält und das Parkplatzsteuersystem das Fahrzeug mittels des Fahrzeug-Tracking-Systems (6) in Echtzeit ortet und in Abhängigkeit von den dem jeweiligen Fahrzeug zugeordneten Parametern
- im Zuge des ersten Steuerungsablaufs unter Zuhilfenahme der Echtzeitortung des Fahrzeug-Tracking-Systems (6) zu einem Parkplatz (P1 bis P10) der zweiten Parkplatzkategorie oder zu einem vollautomatischen Ladeterminal (T1 bis T10) steuert,
- im Zuge des zweiten Steuerungsablaufs unter Zuhilfenahme der Echtzeitortung des Fahrzeug-Tracking-System (6) und der Anzeigemittel des Leitsystems (19) das Fahrzeug manuell gesteuert zu einem Ladeparkplatz (L1 bis L5) der ersten Parkplatzkategorie oder zu einem Parkplatz (P1 bis P10) der zweiten Parkplatzkategorie dirigiert.

8. Parksystem nach einem der vorhergehenden Ansprüche, **dadurch gekennzeichnet, dass** der dritten Parkplatzkategorie ein eigener Nutzerparameter zugeordnet ist und bei entsprechender Auswahl dieses Nutzerparameters
- bei im autonomen oder teilautonomen Fahrmodus fahrbaren Fahrzeugen das Parkplatzsteuersystem das Fahrzeug autonom im Zuge des ersten Steuerungsablaufs zu einem Parkplatz der dritten Parkplatzkategorie steuert,
- bei Fahrzeugen mit manueller Steuerung das Parkplatzsteuersystem mittels des Leitsystems das Fahrzeug im Zuge des zweiten Steuerungsablaufs manuell gesteuert zu einem Parkplatz der dritten Parkplatzkategorie dirigiert.

## Claims

1. Parking system comprising a plurality of parking spaces for vehicles, wherein
- a parking space control system is provided which has distinguishing means (4) that detect vehicles (27, 27') entering the parking system (1) and that determine during a query at least whether the individual vehicle (27, 27') has an autonomous or semi-autonomous driving mode compatible with the parking space control system, and assigns vehicles (27) that have such a compatible autonomous or semi-autonomous driving mode to a first category and all other vehicles to a second category,
- during a first control sequence, the parking space control system takes over control in the case of vehicles (27) of the first category and controls the vehicles in the autonomous or semi-autonomous driving mode to move, on the basis of parameters, autonomously to a parking space (P1 to P10) of a second category without charging facilities or to a fully automatic charging terminal (T1 to T7) with a fully automatic charging and/or discharging function,
- during a second control sequence, the parking space control system guides vehicles (27') of the second category with the aid of a guidance system (19) to move, on the basis of parameters, in a manually controlled manner to a parking space (L1 to L5) of a first parking space category with manual charging facilities and/or discharging facilities or to a parking space (P1 to P10) of the second category without charging facilities,
- the parking space control system queries the parameter specifications of the user as user parameters and stores them in a user parameter memory (31) and contains specifications of the parking system (1) as internal parameters (22),
**characterized**
**in that** a third parking space category is provided which comprises at least two parking spots, and **in that** the parking spots of the third parking space category are equipped with a charging and/or discharging apparatus such that a vehicle in one of the parking spaces of this third parking space category can directly exchange charge with at least one other vehicle in another parking space of this third parking space category.

2. Parking system according to claim 1, **characterized in that** the user parameters include at least one of the user specifications from vehicle type, parking, charging, discharging, buffer usage, length of stay in the parking system and price specifications for charging, discharging and buffer usage.

3. Parking system according to claim 1, **characterized in that** the internal parameters include at least one of the parking system specifications from charging time, discharging time, buffer time, parking location and charging location.

4. Parking system according to claim 1, **characterized in that** the user specifications can be transmitted to the parking space control system in at least one of the ways from
- wireless connection of a parameter memory in the vehicle to the parking space control system via a standardized interface,
- manual input into selection means connected to the parking space control system,
- manual input via a mobile handheld device using a public network.

5. Parking system according to claim 4, **characterized in that** the parking space control system includes parameter query means (10) by means of which it determines whether, according to the user parameters stored in a vehicle-side parameter memory, a vehicle is to be parked and/or charged and/or discharged, and/or whether free capacity of a traction battery is available as a buffer storage for electrical charge and how long the vehicle is available, and stores the user parameters in a user parameter memory (31).

6. Parking system according to claim 4, **characterized in that** the parking space control system includes selection means by means of which it can be manually selected whether a vehicle is to be parked and/or charged and/or discharged, and/or whether free capacity of a traction battery is available as a buffer storage for electrical charge and how long the vehicle is available, and **in that** these details represent the user parameters, are queried by means of the parameter query means (10) and are stored in a user parameter memory (31).

7. Parking system according to claim 1, **characterized in that** the parking space control system includes a vehicle tracking system (6) and the guidance system (19) includes display means, and the parking space control system locates the vehicle in real time by means of the vehicle tracking system (6) and, on the basis of the parameters assigned to the individual vehicle,
- during the first control sequence, controls movement, with the aid of the real-time locating by the vehicle tracking system (6), to a parking space (P1 to P10) of the second parking space category or to a fully automatic charging terminal (T1 to T10),
- during the second control sequence, directs the vehicle with the aid of the real-time locating by the vehicle tracking system (6) and the display means of the guidance system (19) to move in a manually controlled manner to a charging parking space (L1 to L5) of the first parking space category or to a parking space (P1 to P10) of the second parking space category.

8. Parking system according to any of the preceding claims, **characterized in that** the third parking space category is assigned its own user parameter and, when this user parameter is accordingly selected,
- in the case of vehicles that can be driven in an autonomous or semi-autonomous driving mode, the parking space control system controls the vehicle during the first control sequence to move autonomously to a parking space of the third parking space category,
- in the case of vehicles with manual control, the parking space control system directs the vehicle by means of the guidance system during the second control sequence to move in a manually controlled manner to a parking space of the third parking space category.

## Revendications

1. Système de stationnement comportant une pluralité de places de stationnement pour véhicules, dans lequel
- un système de commande de place de stationnement est prévu, qui présente des moyens de différenciation (4), qui détectent des véhicules (27, 27') entrant dans le système de stationnement (1) et établissent au moins, lors d'une interrogation, si le véhicule (27, 27') respectif présente un mode de conduite autonome ou semi-autonome compatible avec le système de commande de place de stationnement, et associe les véhicules (27), qui présentent un tel mode de conduite autonome ou semi-autonome compatible, à une première catégorie et tous les autres véhicules à une deuxième catégorie,
- le système de commande de place de stationnement prend le contrôle pour des véhicules (27) de la première catégorie au cours d'une première séquence de commande et, en mode de conduite autonome ou semi-autonome, commande les véhicules de manière autonome en fonction de paramètres vers une place de stationnement (P1 à P10) d'une deuxième catégorie sans possibilité de charge ou vers un terminal de charge entièrement automatique (T1 à T7) avec fonction de charge et/ou de décharge entièrement automatique,
- le système de commande de place de stationnement guide des véhicules (27') de la deuxième catégorie, au cours d'une seconde séquence de commande, à l'aide d'un système de guidage (19), en fonction de paramètres et de manière commandée manuellement, vers une place de stationnement (L1 à L5) d'une première catégorie de places de stationnement avec possibilité de charge et/ou possibilité de décharge manuelles ou vers une place de stationnement (P1 à P10) de la deuxième catégorie sans possibilité de charge,
- le système de commande de place de stationnement interroge les prescriptions de paramètres de l'utilisateur en tant que paramètres d'utilisateur et les mémorise dans une mémoire de paramètres d'utilisateur (31) et contient des prescriptions du système de stationnement (1) en tant que paramètres internes (22),
**caractérisé en ce**
**qu**'il est prévu une troisième catégorie de places de stationnement qui comprend au moins deux emplacements, **et que** les emplacements de la troisième catégorie de places de stationnement sont équipés d'un dispositif de charge et/ou de décharge de telle sorte qu'un véhicule sur l'une des places de stationnement de cette troisième catégorie de places de stationnement peut échanger directement une charge avec au moins un autre véhicule sur une autre place de stationnement de cette troisième catégorie de places de stationnement.

2. Système de stationnement selon la revendication 1,
**caractérisé en ce que** les paramètres d'utilisateur contiennent au moins l'une des prescriptions d'utilisateur parmi type de véhicule, stationnement, charge, décharge, utilisation de mémoire tampon, durée de séjour dans le système de stationnement, prescriptions de prix pour la charge, la décharge, l'utilisation de mémoire tampon.

3. Système de stationnement selon la revendication 1,
**caractérisé en ce que** les paramètres internes contiennent au moins l'une des prescriptions de système de stationnement parmi moment de charge, moment de décharge, moment de tampon, lieu de stationnement, lieu de charge.

4. Système de stationnement selon la revendication 1,
**caractérisé en ce que** les prescriptions d'utilisateur peuvent être transmises au système de commande de place de stationnement d'au moins l'une des manières
- liaison technique radio d'une mémoire de paramètres dans le véhicule avec le système de commande de place de stationnement par l'intermédiaire d'une interface normalisée,
- saisie manuelle dans des moyens de sélection liés au système de commande de place de stationnement,
- saisie manuelle par l'intermédiaire d'un terminal manuel mobile en utilisant un réseau public.

5. Système de stationnement selon la revendication 4,
**caractérisé en ce que** le système de commande de place de stationnement contient des moyens d'interrogation de paramètres (10) par le biais desquels il établit si un véhicule doit être stationné et/ou chargé et/ou déchargé selon les paramètres d'utilisateur mémorisés dans une mémoire de paramètres côté véhicule et/ou si des capacités libres d'une batterie de traction sont disponibles comme mémoire tampon pour la charge électrique et combien de temps le véhicule est disponible et mémorise les paramètres d'utilisateur dans une mémoire de paramètres d'utilisateur (31).

6. Système de stationnement selon la revendication 4,
**caractérisé en ce que** le système de commande de place de stationnement contient des moyens de sélection par le biais desquels il est possible de sélectionner manuellement si un véhicule doit être stationné et/ou chargé et/ou déchargé et/ou si des capacités libres d'une batterie de traction sont disponibles en tant que mémoire tampon pour la charge électrique et combien de temps le véhicule est disponible **et en ce que** ces indications représentent les paramètres d'utilisateur, sont interrogées par le biais des moyens d'interrogation de paramètres (10) et sont mémorisées dans une mémoire de paramètres utilisateur (31).

7. Système de stationnement selon la revendication 1,
**caractérisé en ce que** le système de commande de place de stationnement contient un système de suivi de véhicule (6) et le système de guidage (19) contient des moyens d'affichage et le système de commande de place de stationnement localise le véhicule en temps réel par le biais du système de suivi de véhicule (6) et, en fonction des paramètres associés au véhicule respectif
- au cours de la première séquence de commande, à l'aide de la localisation en temps réel du système de suivi de véhicule (6), le commande vers une place de stationnement (P1 à P10) de la deuxième catégorie de places de stationnement ou vers un terminal de charge entièrement automatique (T1 à T10),
- au cours de la seconde séquence de commande, à l'aide de la localisation en temps réel du système de suivi de véhicule (6) et des moyens d'affichage du système de guidage (19), dirige le véhicule de manière commandée manuellement vers une place de stationnement de charge (L1 à L5) de la première catégorie de places de stationnement ou vers une place de stationnement (P1 à P10) de la deuxième catégorie de places de stationnement.

8. Système de stationnement selon l'une des revendications précédentes, **caractérisé en ce qu'**un paramètre d'utilisateur propre est associé à la troisième catégorie de places de stationnement et, en cas de sélection correspondante de ce paramètre d'utilisateur
- dans le cas de véhicules pouvant être conduits en mode de conduite autonome ou semi-autonome, le système de commande de place de stationnement dirige le véhicule de manière autonome vers une place de stationnement de la troisième catégorie de places de stationnement au cours de la première séquence de commande,
- dans le cas de véhicules à commande manuelle, le système de commande de place de stationnement dirige le véhicule de manière commandée manuellement vers une place de stationnement de la troisième catégorie de places de stationnement par le biais du système de guidage au cours de la seconde séquence de commande.
